# EUROPÄISCHE PATENTSCHRIFT

(11) **EP 0 702 489 B1**
(45) Veröffentlichungstag und Bekanntmachung des Hinweises auf die Patenterteilung: **02.11.2000**
(21) Anmeldenummer: 95113011.1
(22) Anmeldetag: 18.08.1995
(51) Int. Cl.: H04N 5/782

(54) **Verfahren zur Steuerung der Aufzeichnung von wiederholt gesendeten Sendebeiträgen für ein Aufzeichnungsgerät der Unterhaltungselektronik**
Control method for recording repetitively emitted broadcasts for a consumer electronics recording device
Procédé pour commander l'enregistrement d'émission répétées, pour un appareil d'enregistrement électronique grand public

(30) Priorität: 16.09.1994 DE 4433033
(43) Veröffentlichungstag der Anmeldung: 20.03.1996
(73) Patentinhaber: Koninklijke Philips Electronics N.V., 5621 BA Eindhoven (NL); Philips Corporate Intellectual Property GmbH, 52064 Aachen (DE)
(72) Erfinder: Dötzer, Artur, D-90471 Nürnberg (DE)
(74) Vertreter: van der Kruk, Willem Leonardus

(56) Entgegenhaltungen:
- EP-A- 0 571 761
- EP-A- 0 604 871
- EP-A- 0 627 857
- RF-MAGAZIN FÜR UNTERHALTUNGS- UND KOMMUNIKATIONSELEKTRONIK, Mai 1994, Seiten 10-14, XP000672325 HANS ENGELKAMP: "Fernsehen - total digital"

## Beschreibung

Die Erfindung betrifft ein Verfahren zur Steuerung der Aufzeichnung von wiederholt gesendeten Sendebeiträgen für ein Aufzeichnungsgerät der Unterhaltungselektronik, das über ein Empfangsteil und eine Auswerteschaltung für die Auswertung von zusammen mit den Sendebeiträgen empfangenen, die Sendebeiträge charakterisierenden Zusatzdaten verfügt.

Die in der Unterhaltungselektronik verwendeten Aufzeichnungsgeräte mit einem Empfangsteil, wie z.B. Video- und Audiorecorder, werden von den Benutzern dieser Geräte häufig dazu verwendet Sendebeiträge aufzuzeichnen, die für sie von besonderer Bedeutung sind, um eine Sammlung derartiger Sendebeiträge anzulegen, so daß diese jederzeit wiedergegeben werden können.

Für die Programmierung der Aufzeichnung von Sendebeiträgen mittels eines Videorecorders ist es beispielsweise bekannt, daß zusammen mit den Fernsehsignalen übertragene Zusatzdaten, welche in die Austastlücken des Bildsignals eingefügt sind, zur Steuerung des Aufzeichnungsvorgangs verwendet werden.

Ein derartiges Verfahren ist allgemein unter der Bezeichnung VPS bekannt und ist beispielsweise in dem Aufsatz "VPS - EIN NEUES SYSTEM ZUR BEITRAGSGESTEUERTEN PROGRAMMAUFZEICHNUNG" von A. Heller, erschienen in RUNDFUNKTECHNISCHE MITTEILUNGEN 1985, Heft 4, Seiten 161 - 169, näher beschrieben. Bei diesem System werden jedem Sendebeitrag eindeutige Zusatzdaten hinzugefügt, die im Videorecorder ausgewertet werden. Zur Aufzeichnung eines Sendebeitrags muß der Benutzer die eindeutigen Zusatzdaten mittels Bedieneinrichtung eingeben. Im Videorecorder werden die empfangenen Zusatzdaten mit den eingegebenen Daten verglichen und bei Übereinstimmung wird die Aufzeichnung gestartet.

Ein weiteres, allgemein bekanntes Verfahren zur Programmierung der Aufzeichnung von Sendebeiträgen mittels eines Videorecorders ist unter der Bezeichnung VPV bekannt. Bei diesem System, das z.B. in dem Aufsatz "VIDEOTEXT PROGRAMMIERT VIDEOHEIMGERÄTE" von G. Eitz und K. Oberlies, erschienen in RUNDFUNKTECHNISCHE MITTEILUNGEN 1986, Heft 5, Seiten 223 - 229, näher beschrieben ist, werden die zur Programmierung der Aufzeichnung nötigen Daten, z.B. Anfangszeitpunkt, Endzeitpunkt, Datum usw., aus den Programminformationen des Videotexts entnommen. Dazu muß der Benutzer lediglich den entsprechenden Sendebeitrag in der Programminformation markieren. Die umständliche Eingabe der Daten mittels einer Bedieneinrichtung kann entfallen.

Die vorbekannten Verfahren zur Steuerung der Aufzeichnung von Sendebeiträgen weisen jedoch den grundsätzlichen Nachteil auf, daß die Programmierung des Aufzeichnungsgeräts immer vor Sendebeginn des aufzuzeichnenden Sendebeitrags erfolgen muß, um den Sendebeitrag vollständig aufzeichnen zu können. Erkennt der Benutzer eines nach den bekannten Verfahren arbeitenden Aufzeichnungsgeräts erst einige Zeit nach Beginn eines Sendebeitrags, daß dieser von Interesse für ihn ist, ist die vollständige Aufzeichnung des Sendebeitrags nur mit großem Aufwand für den Benutzer möglich. Um die vollständige Aufzeichnung des Sendebeitrags zur erreichen, muß der Benutzer beispielsweise mittels einer Programmzeitschrift feststellen, ob der Sendebeitrag in nächster Zeit wiederholt wird. Findet eine Wiederholung statt, müssen die für die Aufzeichnung erforderlichen Daten eingegeben werden.

Aus, der Offenlegungsschrift EP 0 604 871 A1 sind ein Verfahren und eine Vorrichtung bekannt, die zusammen mit den Sendebeiträgen übertragene Zusatzdaten auswerten, um die vollständige Aufzeichnung von Sendebeiträgen zu ermöglichen. Die für jeden Sendebeitrag charakteristischen Zusatzdaten werden für einen aufzuzeichnenden Sendebeitrag ermittelt und gespeichert. Nach dem Ende des Sendebeitrags wird auf der selben Sendefrequenz oder alternativ auf anderen Sendefrequenzen nach Zusatzdaten gesucht, die den gespeicherten Zusatzdaten entsprechen. Wird eine übereinstimmung festgestellt, erfolgt die Aufzeichnung des entsprechenden Sendebeitrags.

Das bekannte Verfahren und die zugehörige Vorrichtung weisen jedoch den Nachteil auf, daß das Aufzeichnungsgerät für eine unbestimmte Zeit zur Verfügung stehen muß,da nicht bekannt ist, wann oder ob überhaupt eine Wiederholungssendung erfolgt. Erfolgt keine Wiederholung, ist das Aufzeichnungsgerät dauerhaft blockiert.

Aufgabe der Erfindung ist es deshalb, Verfahren anzugeben, die einer Bedienperson die Programmierung eines Aufzeichnungsgeräts der Unterhaltungselektronik ohne wesentlichen Bedienungsaufwand gestatten und die vollständige Aufzeichnung von bereits begonnenen Sendebeiträgen mit dem Aufzeichnungsgerät der Unterhaltungselektronik gewährleisten, falls die aufzuzeichnenden Sendebeiträge wiederholt gesendet werden, ohne das Aufzeichnungsgerät für einen unbestimmten Zeitraum zu blockieren.

Erfindungsgemäß wird diese Aufgabe durch die Merkmale der Patentansprüche 1 und 2 gelöst.

Der Vorteil eines nach dem erfindungsgemäßen Verfahren mit den Merkmalen des Patentanspruchs 1 gesteuerten Aufzeichnungsgeräts liegt insbesondere darin, daß durch die Auswertung der jedem Sendebeitrag und seinen zugehörigen, wiederholt gesendeten Sendebeiträgen zugeordneten charakterisierenden Daten, die in den Hinweisen über die geplante Sendefolge der Sendebeiträge enthalten sind, eine einfache Programmierung des Aufzeichnungsgeräts möglich ist, wodurch die Blockierung des Aufzeichnungsgeräts für einen unbestimmten Zeitraum vermieden wird.

Der Vorteil eines nach dem erfindungsgemäßen Verfahren mit den Merkmalen des Patentanspruchs 2 gesteuerten Aufzeichnungsgeräts liegt insbesondere darin, daß durch die Auswertung der jedem Sendebeitrag zugeordneten Wiederholungsangaben, die in den, Hinweisen über die geplante Sendefolge der Sendebeiträge enthalten sind, eine besonders einfache Programmierung des Aufzeichnungsgeräts möglich ist, da die Auswertung der weiteren Hinweise über die geplante Sendefolge entfallen kann, wodurch die Blockierung des Aufzeichnungsgeräts für einen unbestimmten Zeitraum vermieden wird.

Weitere Vorteile der Erfindung ergeben sich aus den Unteransprüchen und der nachfolgenden Beschreibung.

Die Steuerung des Aufzeichnungsgeräts wird beispielhaft an einem Videorecorder beschrieben. Zu diesem Zweck werden nur die Bestandteile des Videorecorders dargestellt und näher erläutert, die im Zusammenhang mit der Erfindung von Bedeutung sind. Auf die Darstellung und Beschreibung anderer Bestandteile, wie z.B. Aufzeichnungs- und Wiedergabeeinrichtungen, kann verzichtet werden, da der Aufbau und die Wirkungsweise von Videorecordern in Fachkreisen allgemein bekannt sind.

Es zeigen:
Fig. 1 das Blockschaltbild eines nach dem erfindungsgemäßen Verfahren arbeitenden Aufzeichnungsgeräts, und
Fig. 2 die Abfolge mehrfach, zeitlich versetzt gesendeter Sendebeiträge.

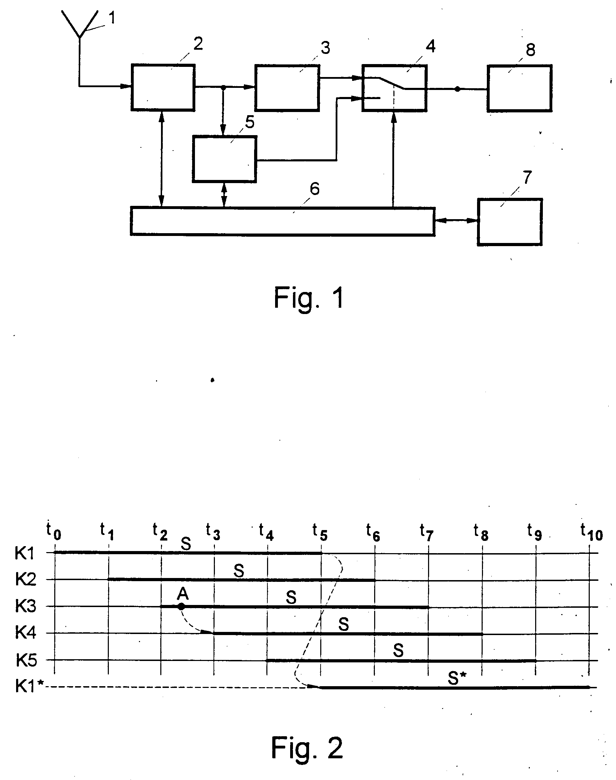

Figur 1 zeigt einen Videorecorder, der als Signalquelle eine Antenne 1 aufweist. Andere Signalquellen, z.B. Kabelanschluß, sind möglich. Die Eingangssignale verschiedener Programmquellen (Sender) werden im Empfänger 2 verarbeitet und an die Bildaufbereitung 3 und eine Einrichtung 5 zur Auswertung von in den empfangenen Signalen enthaltenen Zusatzdaten weitergeleitet. Die Einrichtung 5 kann beispielsweise von einem bekannten Videotextdecoder gebildet werden. Mittels eines Umschalters 4 können entweder die Bildsignale der Bildaufbereitung 3, die Zusatzdaten der Einrichtung 5 oder eine Mischung der beiden Bildsignale auf einem an den Videorecorder angeschlossenen Bildschirm 8 dargestellt werden. Die Bestandteile des Videorecorders werden von einem Mikrocomputer 6 gesteuert. Bedienpersonen können mittels einer Bedieneinrichtung 7, die beispielsweise am Videorecorder selbst angebracht oder eine Fernbedienung sein kann, die Funktionen des Videorecorders steuern.

Betrachtet die Bedienperson einen aktuell empfangenen Sendebeitrag und stellt sie, erst nachdem seit Beginn des Sendebeitrags ein gewisser Zeitraum vergangen ist, fest, daß der Sendebeitrag von Interesse ist, weshalb die vollständige Aufzeichnung des Sendebeitrags wünschenswert erscheint, so kann die Bedienperson mittels der Bedieneinrichtung 7 die erfindungsgemäße Aufzeichnung veranlassen. Dazu kann eine spezielle Taste oder Tastenkombination an der Bedieneinrichtung 7 oder eine Menüsteuerung vorgesehen sein.

Nachdem die spezielle Taste von der Bedienperson betätigt wurde, werden die vom Videotextdecoder 5 zur Verfügung gestellten, der momentan laufenden Sendung zugeordneten Zusatzinformationen vom Mikrocomputer 6 ausgewertet. Insbesondere werden dazu die im Videotext vorhandenen Hinweise über die geplante Sendefolge der Sendebeiträge - die Programminformationen - ausgewertet. Diese enthalten Angaben wie Tag und Zeitpunkt des Sendebeginns, Titel des Sendebeitrags, VPS-Zeit usw.

Für den jeweils aktuellen Tag werden diese Programminformationen beispielsweise für die Programmquellen (Sender) ARD und ZDF auf den Videotextseiten 301 bis 304 zur Verfügung gestellt. Auf anderen Seiten des Videotexts dieser Sender finden sich außerdem Programminformationen für einen gewissen Zeitraum, beispielsweise 14 Tage.

Der Aufbau und die Funktionsweise von VPS und Videotext sind in der Fachwelt allgemein bekannt und können beispielsweise den eingangs erwähnten Aufsätzen entnommen werden.

Für den von der Bedienperson gekennzeichneten Sendebeitrag werden vom Mikrocomputer 6 aus den Programminformationen Daten entnommen und gespeichert, welche die Sendung eindeutig charakterisieren. Dazu eignet sich beispielsweise der Titel des gekennzeichneten Sendebeitrags.

Um die Entnahme des dem aufzuzeichnenden Sendebeitrag zugeordneten Titels durch den Mikrocomputer 6 zu gewährleisen, wird anhand der aktuellen Zeit, die beispielsweise vom Videotextdecoder zur Verfügung gestellt werden kann, festgestellt welcher in der Programminformation angegebene Sendebeitrag momentan empfangen wird. Dies ist auch durch die Auswertung der für jeden Sendebeitrag charakteristischen VPS-Signale oder mittels einer im Videorecorder, vorhandenen Echtzeituhr möglich.

Danach wertet der Mikrocomputer 6 alle für spätere Zeitpunkte in den Programminformationen (aktueller Tag und 14tägige Programmvorschau) angegebenen Sendebeiträge aus, ob deren Titel mit dem gespeicherten Titel des gekennzeichneten Sendebeitrags übereinstimmt. Wird eine Übereinstimmung festgestellt, werden die zu diesem Sendebeitrag gehörenden Aufzeichnungsdaten (Sendetag, Start- und Endzeitpunkt, VPS-Zeit usw.) vom Mikrocomputer 6 aus den vom Videotextdecoder 5 gelieferten Daten` extrahiert, gespeichert und zur Programmierung des Aufzeichnungsvorgangs des wiederholt gesendeten Sendebeitrags verwendet.

Neben der Verwendung eines einzigen Kriteriums zur Suche nach Wiederholungssendungen ist es auch möglich, weitere übereinstimmende Zusatzdaten auszuwerten. Beispielsweise kann zusätzlich die im VPS-Signal enthaltene Programmart (Spielfilm, Sport, Nachrichten usw.) ausgewertet werden. Dies bietet den Vorteil, daß trotz geringer Abweichungen eines der Suchkriterien (wenn z.B. der als Suchkriterium verwendete Titel bei der Wiederholungssendung nur teilweise oder abgekürzt in den Programminformationen enthalten ist) die sichere Programmierung bei Übereinstimmung der anderen Kriterien erfolgen kann.

Neben dem oben beschriebenen Verfahren ist es auch möglich, daß die Programminformationen neben den bereits erwähnten Daten zusätzlich Daten enthalten, die angeben, zu welchem Zeitpunkt eine Wiederholung stattfindet, bzw. auf welcher anderen Videotextseite der Programminformationen die Angaben über eine Wiederholungssendung zu finden sind. Enthalten die Programminformationen derartige Daten, ist die Programmierung der Aufzeichung des wiederholt gesendeten Sendebeitrags unmittelbar mit diesen Daten möglich. Die weitere Auswertung der Programminformationen, wie oben beschrieben, kann deshalb entfallen.

Zur Beschleunigung der Auswertung der Videotextseiten durch den Mikrocomputer 6 ist es zweckmäßig, wenn durch die Bedienperson oder vorab werksseitig bei der Herstellung des Videorecorders festgelegt wird, welche der Videotextseiten die Programminformationen (aktuelle Programminformationen und Programmvorschau) enthalten. Eine derartige Festlegung ist auch für die Daten vorteilhaft, welche die Sendebeiträge eindeutig charakterisieren. Beispielsweise kann festgelegt werden, daß der Titel des Sendebeitrags als Suchkriterium für wiederholt gesendete Sendebeiträge verwendet werden soll.

Werden Sendebeiträge von einem anderen Sender gesendet als die wiederholt gesendeten Sendebeiträge, ist neben der, bereits beschriebenen Auswertung des Senders der den Sendebeitrag ursprünglich sendet, die Auswertung eines oder mehrerer anderen Sender nötig. Dies trifft beispielsweise für die Sendeanstalten ZDF, ORF und SRG zu, deren Sendebeiträge teilweise von 3SAT wiederholt werden.

Zur Beschleunigung des Auswertevorgangs kann vorgebeben sein oder werden, welcher oder welche Sender ausgewertet werden sollen. Die Angabe des auszuwertenden Senders kann auch den Wiederholungsangaben der zu dem ursprünglichen Sendebeitrag gehörenden Programminformationen entnommen werden.

Bei der Programmierung der Aufzeichnung einer Wiederholungssendung, die von einem anderen Sender ausgestrahlt wird, muß bei der Programmierung durch den Mikrocomputer 6 der Empfänger 2 entsprechend auf den Sender abgestimmt werden, in dessen Videotext die für den aufzuzeichnenden Sendebeitrag charakteristischen Daten ermittelt wurden.

Der Bedienvorgang wird weiter vereinfacht und sicherer, wenn festlegbar ist, innerhalb welchen Zeitraums nach einer Wiederholungssendung gesucht werden soll. Wird innerhalb dieses Zeitraums, oder z.B. des Zeitraums der durch die 14tägige Programmvorschau in den Videotextseiten festgelegt ist, keine Wiederholungssendung festgestellt, kann eine Information für die Bedienperson erzeugt werden und am Bildschirm 8 oder einer Anzeige des Videorecorders dargestellt werden. In diesem Fall kann der Rest des ausgewählten und bereits begonnenen Sendebeitrags sofort aufgezeichnet werden.

Wurde ein kleiner Zeitraum vorgegeben, kann die Bedienperson informiert werden, falls eine Wiederholungssendung festgestellt wurde, die erst nach Ablauf des vorgegebenen Zeitraums gesendet wird, um die Aufzeichnung dieser Wiederholungssendung zu ermöglichen.

Eine weitere Verbesserung ergibt sich, wenn der Benutzer über zeitliche Überschneidungen informiert wird. Diese können sich beispielsweise ergeben, wenn das in der verwendeten Videokassette zur Verfügung stehende Bandmaterial nicht für einE vollständige Aufzeichnung reicht. Eine weitere Überschneidung ergibt sich für den Fall, daß für einen bestimmten Zeitpunkt bereits die Aufzeichnung eines anderen Sendebeitrags programmiert wurde und eine aus den Programminformationen ermittelte Aufzeichnung einer Wiederholungssendung in denselben Zeitraum fällt. In diesem Fall kann ermittelt werden, ob weitere Wiederholungssendungen folgen, bei deren Aufzeichnung es nicht zu Überschneidungen kommt.

Eine weitere Funktionsverbesserung ergibt sich, wenn bei Sendern ohne VPS die Programminformationen vor dem ermittelten Aufzeichnungszeitpunkt laufend oder mit gewissen zeitlichen Abständen auf Änderungen überprüft werden. Werden Änderungen ermittelt, wird die Aufnahmeprogrammierung an die ermittelten Änderungen angepaßt.

Neben der beschriebenen Verwendung der erfindungsgemäßen Verfahren zur Steuerung eines Videorecorders ist es für den Fachmann offensichtlich, daß sich die Verfahren auch für andere Aufzeichnungsgeräte der Unterhaltungselektronik eignen, wenn mit diesen Empfangsgeräte verbunden sind, welche die Auswertung von Zusatzdaten gestatten, die Hinweise über die geplante Sendefolge enthalten.

Prinzipiell lassen sich derartige Hinweise auch beim Hörrundfunk einfügen, wenn bei diesem Zusatzdaten übertragen werden können, wie es z.B. bei Systemen nach RDS (Radio Daten System), DAB (Digital Audio Broadcasting), DSR (Digitales Satelliten Radio) oder anderen der Fall ist.

Auch bei zukünftig zu erwartenen Systemen, speziell für digitale Fernsehsysteme wie z.B. im rf-Magazin 5/1994, Seiten 10 - 14, "Fernsehen - total digital" beschrieben, ist die Erfindung verwendbar, da diese Systeme über die benötigten Zusatzdaten verfügen werden. Von besonderem Interesse ist in diesem Zusammenhang die Aufzeichnung von Sendebeiträgen, die zeitversetzt auf mehreren Sendekanälen übertragen werden (Near-Video-On-Demand).

In Figur 2 ist die zeitversetzte Übertragung eines Sendebeitrags S dargestellt. Der dargestellte Sendebeitrag S dauert beispielsweise fünf Zeiteinheiten t₀ bis t₅. Mit Ablauf jeder Zeiteinheit wird der Sendebeitrag erneut gestartet und auf einem anderen Sendekanal K1 bis K5 gesendet. Nach fünf Zeiteinheiten wird der Sendebeitrag S erneut auf Sendekanal K1 gesendet usw. (zur Verdeutlichung dargestellt als K1* und S*). Kennzeichnet die Bedienperson den Sendebeitrag S, der beispielsweise auf dem Sendekanal K3 empfangen wird an der Stelle A, wird aus den Zusatzdaten ermittelt, auf welchem Sendekanal und zu welchem Zeitpunkt der Sendebeitrag erneut gesendet wird. Die ermittelten Daten (hier: K4 und t₃) werden zur Programmierung des Aufzeichnungsgeräts verwendet.

## Patentansprüche

1. Verfahren zur Steuerung der Aufzeichnung von wiederholt gesendeten Sendebeiträgen für ein Aufzeichnungsgerät der Unterhaltungselektronik, das über ein Empfangsteil und eine Auswerteschaltung für die Auswertung von zusammen mit den Sendebeiträgen empfangenen, die Sendebeiträge charakterisierenden Zusatzdaten verfügt, wobei in den Zusatzdaten Hinweise über die geplante Sendefolge der Sendebeiträge enthalten sind und zumindest Teile der charakterisierenden Zusatzdaten für jeden Sendebeitrag und seine zugehörigen, wiederholt gesendeten Sendebeiträge gleich sind, mit nachfolgenden Verfahrensschritten:
- Kennzeichnung des aufzuzeichnenden Sendebeitrags erst nach bereits erfolgtem Beginn des Sendebeitrags,
- Ermitteln und Speichern zumindest eines Teils der für den aufzuzeichnenden Sendebeitrag und seine zugehörigen, wiederholt gesendeten Sendebeiträge gleichen Teile der charakterisierenden Zusatzdaten aus den zusammen mit dem gekennzeichneten Sendebeitrag gesendeten Zusatzdaten,
- Ermitteln des wiederholt gesendeten Sendebeitrags aus den in den Zusatzdaten enthaltenen Hinweisen über die geplante Sendefolge der Sendebeiträge, durch Vergleich mit den gespeicherten Teilen der Zusatzdaten, und
- Programmierung der Aufzeichnung des ermittelten, wiederholt gesendeten Sendebeitrags mittels der in den Hinweisen über die geplante Sendefolge der Sendebeiträge enthaltenen Daten.

2. Verfahren zur Steuerung der Aufzeichnung von wiederholt gesendeten Sendebeiträgen für ein Aufzeichnungsgerät der Unterhaltungselektronik, das über ein Empfangsteil und eine Auswerteschaltung für die Auswertung von zusammen mit den Sendebeiträgen empfangenen, die Sendebeiträge charakterisierenden Zusatzdaten verfügt, wobei die Zusatzdaten Hinweise über die geplante Sendefolge der Sendebeiträge sowie Wiederholungsangaben für die wiederholt gesendeten Sendebeiträge enthalten, mit nachfolgenden Verfahrensschritten:
- Kennzeichnung des aufzuzeichnenden Sendebeitrags erst nach bereits erfolgtem Beginn des Sendebeitrags,
- Ermitteln des zum aufzuzeichnenden Sendebeitrag gehörigen, wiederholt gesendeten Sendebeitrags aus den in den Zusatzdaten enthaltenen Hinweisen über die geplante Sendefolge der Sendebeiträge, durch Auswerten der in den Hinweisen über die geplante Sendefolge enthaltenen Wiederholungsangaben, und
- Programmierung der Aufzeichnung des ermittelten, wiederholt gesendeten Sendebeitrags mittels der in den Hinweisen über die geplante Sendefolge der Sendebeiträge enthaltenen Daten.

3. Verfahren nach Anspruch 1 oder 2,
**dadurch gekennzeichnet**,
daß festgelegt wird, in welchem Bereich der Zusatzdaten einer jeden Programmquelle die Hinweise über die geplante Sendefolge der Sendebeiträge enthalten sind.

4. Verfahren nach einem der Ansprüche 1 bis 3,
**dadurch gekennzeichnet**,
daß für den Fall, daß für den aufzuzeichnenden Sendebeitrag kein wiederholt gesendeter Sendebeitrag in den Hinweisen über die geplante Sendefolge ermittelt werden kann, ein erstes Informationssignal erzeugt und/oder der gekennzeichnete Sendebeitrag sofort aufgezeichnet wird.

5. Verfahren nach einem der Ansprüche 1 bis 4,
**dadurch gekennzeichnet**,
daß für den Fall, daß es bei der Programmierung der Aufzeichnung des ermittelten, wiederholt gesendeten Sendebeitrags mittels der in den Hinweisen über die geplante Sendefolge enthaltenen Daten zu zeitlichen Überschneidungen mit zuvor bereits vorgenommenen Programmierungen kommt, ein zweites Informationssignal erzeugt wird und/oder weitere überschneidungsfreie Wiederholungen des gekennzeichneten Sendebeitrags aus den Hinweisen über die geplante Sendefolge ermittelt werden.

6. Verfahren nach einem der Ansprüche 1 bis 5,
**dadurch gekennzeichnet**,
daß festgelegt wird, welche Teile der Zusatzdaten einer jeden Programmquelle für die Sendebeiträge und ihre zugehörigen, wiederholt gesendeten Sendebeiträge gleich sind und für die Auswertung herangezogen werden sollen.

7. Verfahren nach einem der, Ansprüche 1 bis 6,
**dadurch gekennzeichnet**,
daß ein Zeitraum festgelegt ist oder festlegbar ist, innerhalb dessen die Aufzeichnung des wiederholt, gesendeten Sendebeitrags erfolgen muß, und/oder daß bei Überschreiten des Zeitraums ein drittes Informationssignal erzeugt wird.

8. Verfahren nach einem der Ansprüche 1 bis 7,
**dadurch gekennzeichnet**,
daß zusätzlich oder alternativ eine oder mehrere Programmquellen auf die gespeicherten Teile der Zusatzdaten hin überprüft werden, und daß bei Übereinstimmung die Aufzeichnung und Programmierung der Aufzeichnung der entsprechenden Programmquelle erfolgt.

9. Verfahren nach einem der Ansprüche 1 bis 8,
**dadurch gekennzeichnet**,
daß die zum aufzuzeichnenden Sendebeitrag gehörigen Zusatzdaten nach erfolgter Programmierung weiterhin laufend oder mit zeitlichen Abständen auf Änderungen überwacht werden, und daß die Programmierung festgestellten Änderungen angepaßt wird.

## Claims

1. A method of controlling the recording of rebroadcast program items for a home-entertainment recording apparatus having a receiving section and an evaluation circuit for the evaluation of additional data received together with the program items and characterizing the program items, the additional data containing information about the scheduled broadcast sequence of the program items and at least parts of the characterizing additional data being the same for each program item and its corresponding rebroadcast program items, which method has the following steps:
- identifying the program item to be recorded, after the program item has already started,
- determining and storing at least some of the parts of the characterizing additional data which are the same for the program item to be recorded and its corresponding rebroadcast program items on the basis of the additional data transmitted together with the identified program item,
- determining the rebroadcast program item from the information about the scheduled broadcast sequence of the program items, which information is contained in the additional data, by comparison with the stored parts of the additional data, and
- programming of the recording of the rebroadcast program item thus determined, with the aid of the data contained in the information about the scheduled broadcast sequence of the program items.

2. A method of controlling the recording of rebroadcast program items for a home-entertainment recording apparatus having a receiving section and an evaluation circuit for the evaluation of additional data received together with the program items and characterizing the program items, the additional data containing information about the scheduled broadcast sequence of the program items and rebroadcast information for the rebroadcast program items, which method has the following steps:
- identifying the program item to be recorded, after the program item has already started,
- determining the rebroadcast program item corresponding to the program item to be recorded from the information about the scheduled broadcast sequence of the program items, which information is contained in the additional data, by evaluating the rebroadcast information contained in the information about the scheduled broadcast sequence, and
- programming of the recording of the rebroadcast program item thus determined, with the aid of the data contained in the information about the scheduled broadcast sequence of the program items.

3. A method as claimed in Claim 1 or 2,
characterized in that
it is specified which area of the additional data from any program source contains the information about the scheduled broadcast sequence of the program items.

4. A method as claimed in any one of the Claims 1 to 3,
characterized in that,
in the case that for the program item to be recorded no rebroadcast program item can be found in the information about the scheduled broadcast sequence, a first information signal is generated and/or the identified program item is recorded immediately.

5. A method as claimed in any one of the Claims 1 to 4,
characterized in that,
in the case that during the programming of the recording of the rebroadcast program item which has been determined with the aid of the data contained in the information about the scheduled broadcast sequence there are overlaps in time with previously effected programmings, a second information signal is generated and/or further non-overlapping rebroadcasts of the identified program item are determined with the aid of the information about the scheduled broadcast sequence.

6. A method as claimed in any one of the Claims 1 to 5,
characterized in that
it is specified which parts of the additional data from any program source are the same for the program item and its corresponding rebroadcast program items and are to be used for the evaluation.

7. A method as claimed in any one of the Claims 1 to 6,
characterized in that
a period of time is specified or can be specified within which the recording of the rebroadcast program item should be effected, and/or a third information signal is generated when the period is surpassed.

8. A method as claimed in any one of the Claims 1 to 7,
characterized in that
additionally or alternatively one or more program sources are examined with regard to the stored parts of the additional data, and the recording and programming of the recording of the corresponding program source is effected in the case of agreement.

9. A method as claimed in any one of the Claims 1 to 8,
characterized in that
after programming has been effected the additional data associated with the program item to be recorded is subsequently monitored for changes either continually or at time intervals, and the programming is adapted to any detected changes.

## Revendications

1. Procédé de commande de l'enregistrement d'émissions répétées pour un appareil d'enregistrement électronique grand public qui dispose d'un récepteur et d'un circuit d'évaluation pour l'évaluation de données supplémentaires caractérisant les émissions et reçues en même temps que les émissions, des indications sur la séquence d'émission prévue des émissions étant contenues dans les données supplémentaires et des parties au moins des données supplémentaires caractérisantes étant identiques pour chaque émission et ses émissions correspondantes diffusées à plusieurs reprises, avec les étapes suivantes du procédé :
- caractérisation de l'émission à enregistrer seulement après le début déjà intervenu de l'émission;
- détermination et enregistrement d'au moins une partie des éléments des données supplémentaires caractérisantes identiques pour l'émission enregistrée et ses émissions correspondantes diffusées à plusieurs reprises à partir des données supplémentaires transmises avec l'émission caractérisée;
- détermination de l'émission diffusée à plusieurs reprises à partir des indications contenues dans les données supplémentaires sur la séquence prévue de diffusion des émissions par comparaison avec les parties enregistrées des données supplémentaires, et
- programmation de l'enregistrement de l'émission déterminée diffusée à plusieurs reprises à l'aide des données contenues dans les indications sur la suite prévue de diffusion des émissions.

2. Procédé de commande de l'enregistrement d'émissions diffusées à plusieurs reprises pour un appareil d'enregistrement électronique grand public qui dispose d'un récepteur et d'un circuit d'évaluation pour l'évaluation de données supplémentaires caractérisant les émissions, reçues en même que les émissions, les données supplémentaires contenant des indications sur la suite prévue de diffusion des émissions ainsi que des indications répétées pour les répétitions pour les émissions diffusée à plusieurs reprises avec les étapes suivantes du procédé :
- caractérisation de l'émission à enregistrer seulement après le début déjà intervenu de l'émission;
- détermination de l'émission diffusée à plusieurs reprises correspondant à l'émission à enregistrer à partir des indications contenues dans les données supplémentaires sur la suite prévue de diffusion des émissions par évaluation des indications sur les rediffusions contenues dans les indications sur la suite prévue de diffusion, et
- programmation de l'enregistrement de l'émission déterminée diffusée à plusieurs reprises à l'aide des données contenues dans les indications sur la suite prévue de diffusion des émissions.

3. Procédé selon l'une des revendications 1 ou 2, caractérisé en ce que la zone des données supplémentaires de chaque source de programme qui contient les indications sur la suite prévue de diffusion des émissions est déterminée.

4. Procédé selon l'une des revendications 1 à 3, caractérisé en ce qu'en cas ou aucune émission diffusée à plusieurs reprises ne peut être déterminée dans les indications sur la suite prévue de diffusion pour l'émission à enregistrer, un premier signal d'information est produit et/ou l'émission caractérisée est enregistrée immédiatement.

5. Procédé selon l'une des revendications 1 à 4, caractérisé en ce qu'au cas où il se produit lors de la programmation de l'enregistrement de l'émission déterminée et diffusée à plusieurs reprises à l'aide des données contenues dans les indications sur la séquence prévue de diffusion des chevauchements temporels avec des programmations déjà effectuées au préalable, un deuxième signal d'information est produit et/ou d'autres rediffusions, exemptes de chevauchement, de l'émission caractérisée sont déterminées à partir des indications sur la suite prévue de diffusion.

6. Procédé selon l'une des revendications 1 à 5, caractérisé en ce que les parties de données supplémentaires de chaque source de programme pour les émissions et les émissions correspondantes diffusées à plusieurs reprises qui sont identiques et doivent être utilisées pour l'évaluation sont déterminées.

7. Procédé selon l'une des revendications 1 à 6, caractérisé en ce qu'il est défini ou peut être défini une période durant laquelle l'enregistrement de l'émission diffusée à plusieurs reprises doit intervenir et/ou qu'en cas de dépassement de cette période, un troisième signal d'information est produit.

8. Procédé selon l'une des revendications 1 à 7, caractérisé en ce qu'en complément ou en variante, une ou plusieurs sources de programme sont contrôlées quant aux parties enregistrées des données supplémentaires et qu'en cas de concordance, l'enregistrement et la programmation de l'enregistrement de la source de programme correspondante sont effectués.

9. Procédé selon l'une des revendications 1 à 8, caractérisé en ce que les données supplémentaires appartenant à l'émission à enregistrer sont par ailleurs contrôlées après la programmation en permanence ou à des intervalles temporels quant aux modifications et que la programmation est adaptée aux changements constatés.
